# EUROPÄISCHE PATENTSCHRIFT

(11) **EP 2 565 509 B1**
(45) Veröffentlichungstag und Bekanntmachung des Hinweises auf die Patenterteilung: **19.11.2014**
(21) Anmeldenummer: 11179156.2
(22) Anmeldetag: 29.08.2011
(51) Int. Cl.: F16L 37/088, F16L 37/098

(54) **Lösbarer Steckverbinder für sanitäre Versorgungssysteme**
Releasable connector for sanitary supply systems
Connecteur à fiche amovible pour systèmes d'alimentation sanitaires

(43) Veröffentlichungstag der Anmeldung: 06.03.2013
(73) Patentinhaber: Geberit International AG, 8645 Jona (CH)
(72) Erfinder: Hausheer, Roman, 6330 Cham (CH)
(74) Vertreter: Frischknecht, Harry Ralph

(56) Entgegenhaltungen:
- WO-A1-99/01691
- WO-A1-2005/098301
- US-A1- 2002 113 431

## Beschreibung

### TECHNISCHES GEBIET

Die vorliegende Erfindung betrifft einen lösbaren Steckverbinder für sanitäre Versorgungssysteme gemäss dem Oberbegriff von Anspruch 1.

### STAND DER TECHNIK

Aus dem Stand der Technik sind lösbare Steckverbinder für sanitäre Versorgungssysteme bekannt. Beispielsweise ist aus der EP 0 615 089 ein Steckverbinder bekannt, welcher mit einem Sprengring funktioniert. Zum Lösen dieser Steckverbindung muss der Sprengring mit einem Werkzeug radial aufgebogen werden, wobei das Werkzeug entgegen der Bewegungsrichtung des zu lösenden Steckverbinders bewegt werden muss, was für den Installateur mühselig ist. Weiter ist auch die Verwendung eines Werkzeuges für den Installateur ein Nachteil, da ein schnelles Lösen der Verbindung verunmöglicht wird.

Die Druckschriften US 2002/0113431, WO 99/01691 und die WO 2005/098301 zeigen verschiedene Ausführungen von Steckverbindungen für Rohrleitungen.

### DARSTELLUNG DER ERFINDUNG

Ausgehend von diesem Stand der Technik liegt der Erfindung eine Aufgabe zugrunde, einen lösbaren Steckverbinder für sanitäre Versorgungssysteme anzugeben, welcher die Nachteile des Standes der Technik überwindet. Insbesondere ist es eine Aufgabe, einen Steckverbinder anzugeben, welcher ohne den Einsatz eines Werkzeuges vom sanitären Versorgungssystem trennbar ist.

Eine solche Aufgabe löst ein Steckverbinder für Sanitärsysteme nach Anspruch 1.

Demgemäss umfasst ein lösbarer Steckverbinder für Sanitärsysteme eine Kupplungshülse mit einer um eine Mittelachse umlaufenden Seitenwand, welche einen Kanal zur Durchführung eines Mediums durch die Kupplungshülse umgibt und aussenseitig durch eine Mantelfläche begrenzt ist, ein Löseelement, welches auf der Mantelfläche bewegbar gelagert ist und entlang einer Lösebewegung von einer Ausgangslage in eine Endlage bewegbar ist, und eine Betätigungshülse, welche entlang einer Betätigungsbewegung von einer Ausgangslage in eine Endlage bewegbar zur Kupplungshülse und zum Löseelement angeordnet ist. Das Löseelement steht über ein Übertragungselement mit der Betätigungshülse in Verbindung, wobei durch das Übertragungselement die Betätigungsbewegung der Betätigungshülse auf das Löseelement übertragbar und somit die Lösebewegung bereitstellbar ist. Die Kupplungshülse und das sich in der Ausgangslage befindliche Löseelement stellen einen Aufnahmeraum für einen Sicherungsring eines Versorgungssystems bereit, wobei das Löseelement während der Lösebewegung in diesen Aufnahmeraum hinein in seine Endlage bewegbar ist, wobei der sich im Aufnahmeraum befindliche Sicherungsring durch die Bewegung des Löseelementes radial zur Mittelachse nach aussen bewegbar ist.

Durch die Anordnung des Löseelementes, welches über das Übertragungselement durch die Betätigungshülse bewegbar ist, kann ein Steckverbinder angegeben werden, welche einfach handhabbar bzw. einfach lösbar ist.

Die Betätigungsbewegung wird durch das Übertragungselement umgelenkt, wobei die Lösebewegung das Löseelement gegen die Richtung der Betätigungsbewegung der Betätigungshülse verläuft. Folglich kann der Benutzer das Betätigungselement mit der Lösebewegung beaufschlagen und das Löseelement wird in Richtung Sanitärsystem bewegt und trifft dort auf den Sicherungsring, welcher nach aussen gedrückt wird.

Das Übertragungselement weist die Gestalt von mindestens einer Kugel auf, welche zwischen Betätigungshülse und Löseelement angeordnet ist und mit einer Fläche der Betätigungshülse und mit einer Fläche der Lösehülse in Kontakt steht, wobei die Flächen im Querschnitt senkrecht zur Mittelachse gesehen geneigt zur Bewegungsrichtung des Löseelementes bzw. der Betätigungshülse verlaufen.

Für jede der Kugeln ist vorzugsweise ein Aufnahmeraum vorgesehen, welcher durch die besagten Flächen und eine an der Kupplungshülse angeformte Flanschfläche begrenzt ist.

Vorzugsweise wird das Löseelement als Lösehülse bereitgestellt, wobei die Lösehülse vorzugsweise aus zwei Halbschalen besteht, welche die Kupplungshülse umgeben. Vorzugsweise werden die Halbschalen durch das Betätigungselement umgeben und so zur Kupplungshülse gesichert.

Vorzugsweise umfasst der Steckverbinder weiter ein Federelement, welches die Betätigungshülse und die Lösehülse in der entsprechenden Ausgangslage hält bzw. welches auf die Betätigungshülse und die Lösehülse eine Rückstellkraft bereitstellt, so dass die Betätigungshülse und die Lösehülse nach erfolgter Betätigung selbsttätig in die Ausgangslage bewegbar sind, wobei diese Bewegung von der Lösehülse über das Übertragungselement erfolgt.

Vorzugsweise umfasst das Löseelement eine Stirnfläche, welche vorzugsweise angeschrägt ausgebildet ist, wobei die Stirnfläche bei der Lösebewegung in Kontakt mit dem Sicherungsring kommt und diesen radial nach aussen drückt bzw. aufweitet.

Vorzugsweise wird der Aufnahmeraum für den Sicherungsring durch die Mantelfläche der Kupplungshülse, durch eine Stirnfläche der Lösehülse und durch eine sich im Wesentlichen senkrecht zur Mantelfläche erstreckenden Flanschfläche begrenzt.

Ein sanitäres Versorgungssystem umfasst einen lösbaren Steckverbinder nach obiger Beschreibung und ein Rohr mit einem Rohrende, wobei im Bereich des Rohrendes eine Aufnahmenut vorhanden ist, in welcher Aufnahmenut der besagte Sicherungsring gelagert ist.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines lösbaren Steckverbinders für Sanitärsysteme gemäss einer Ausführungsform mit teilweise geschnitten dargestellten Teilen;
- Fig. 2: den Steckverbinder nach Figur 1 mit einem Sanitärsystem, hier mit einem Anschlussrohr;
- Fig. 3: eine Schnittansicht durch den Steckverbinder nach Figur 1;
- Fig. 4: eine Schnittansicht durch den Steckverbinder nach der Figur 2; und
- Fig. 5: eine weitere Schnittansicht durch den Steckverbinder nach Figur 1.

### BESCHREIBUNG BEVORZUGTER AUSFÜHRUNGSFORMEN

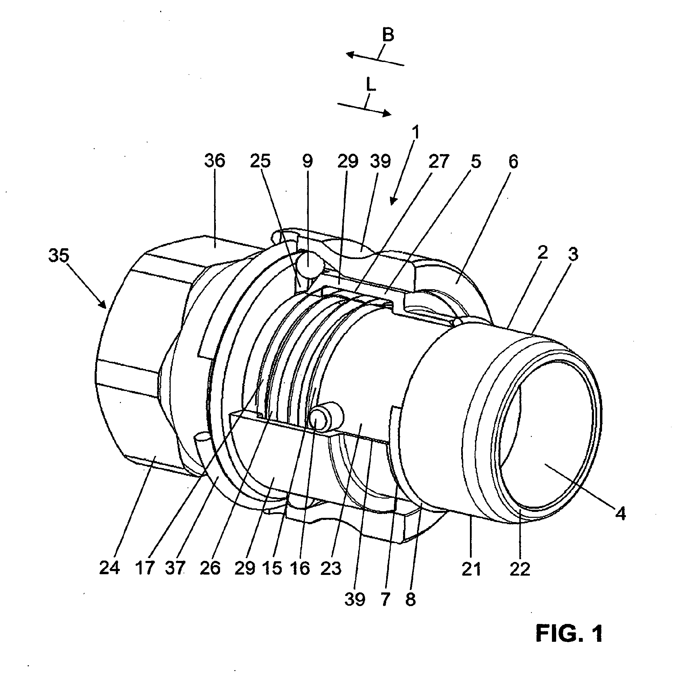

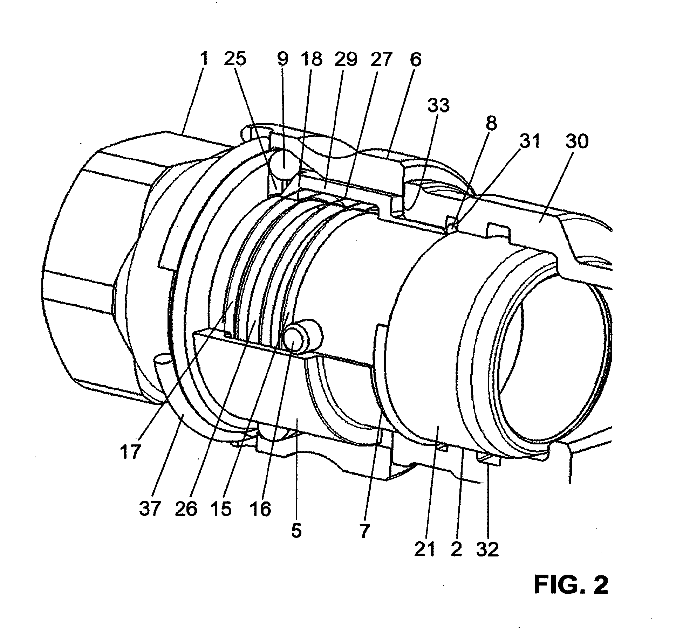

In den Figuren 1 und 2 werden perspektivische Ansichten eines lösbaren Steckverbinders 1 für ein Sanitärsystem gezeigt. Das Sanitärsystem wird in der Figur 2 durch einen Abschnitt eines Rohrs 30 dargestellt. Der lösbare Steckverbinder 1 lässt sich ohne Zuhilfenahme von Werkzeug mit dem Sanitärsystem bzw. dem Rohr verbinden und wieder lösen bzw. trennen. Der Steckverbinder 1 kann eine Vielzahl von Funktionen aufweisen, beispielsweise kann er als Verbindungsfitting zwischen zwei Rohren dienen oder aber die Schnittstelle zwischen dem Sanitärsystem und einem durch den Installateur benutztes Werkzeug bilden. Das Werkzeug kann beispielsweise ein Druckprüfgerät sein.

Der Steckverbinder 1, wie in der Figur 1 dargestellt, umfasst im Wesentlichen eine Kupplungshülse 2, ein Löseelement 5, vorzugsweise in der Gestalt einer Lösehülse, und eine Betätigungshülse 6. Die Lösehülse 5 und auch die Betätigungshülse 6 sind in den Figuren jeweils geschnitten dargestellt, umgeben aber im Wesentlichen die Kupplungshülse 2 vollständig. Über die Kupplungshülse 2 findet die eigentliche Verbindung mit dem Sanitärsystem und gegebenenfalls weiteren Elementen, wie dem oben genannten Werkzeug oder einem weiteren Rohr statt. Über die Betätigungshülse 6 kann die Lösehülse 5 betätigt werden, über welche dann ein Sicherungselement, hier über einen Sicherungsring 8, welcher die Verbindung zwischen Steckverbinder 1 und Sanitärsystem mechanisch sichert, lösbar ist. Der Sicherungsring 8 wird beim Vorgang des Zusammensteckens in den Aufnahmeraum 7 gedrückt und expandiert sich dann in die Nut 31, sobald diese über den Sicherungsring 8 zu liegen kommt.

Wie in der Figur 2 erkannt werden kann, ist ein mechanischer Sicherungsring 8 als mechanisches Sicherungselement für die Sicherung gegen axiale Bewegungen zwischen Steckverbinder 1 und Rohr 30 bzw. Sanitärsystem vorgesehen. Der Sicherungsring 8 befindet sich dabei in einer umlaufenden Rille bzw. Nute 31 innenseitig am Rohr 30 und kommt in einen Aufnahmeraum 7 am Steckverbinder 1 zu liegen. Vorzugsweise ist der Sicherungsring 8 also Teil des Sanitärsystems. Beim Einschieben des Steckverbinders wird der Sicherungsring 8 in diese Nut 31 durch den Steckverbinder 1 bzw. den Dichtungsabschnitt 21 nach aussen verdrängt. Sobald der Steckverbinder 1 mit dem Aufnahmeraum 7 auf gleicher Höhe mit der Nut 31 bzw. mit dem Sicherungsring 8 zu liegen kommt, rastet der Sicherungsring 8 in den Aufnahmeraum 7 ein, womit eine mechanische Einrastverbindung zwischen Steckverbinder 1 und Sanitärsystem geschaffen wird. Über die Lösehülse 5 kann dann, wie dies unten beschrieben wird, diese Verbindung wieder getrennt werden. Weiter umfasst das Sanitärsystem bzw. das Rohr 30 einen Dichtungsnut 32, in welcher eine hier nicht dargestellte Dichtung, wie beispielsweise ein O-Ring, angeordnet werden kann. Die Dichtung steht dabei mit einem Dichtungsabschnitt 21 der Kupplungshülse 2 in Kontakt, womit der Spalt zwischen Kupplungshülse 2 und Rohr 30 entsprechend gegenüber Fluiden abgedichtet wird.

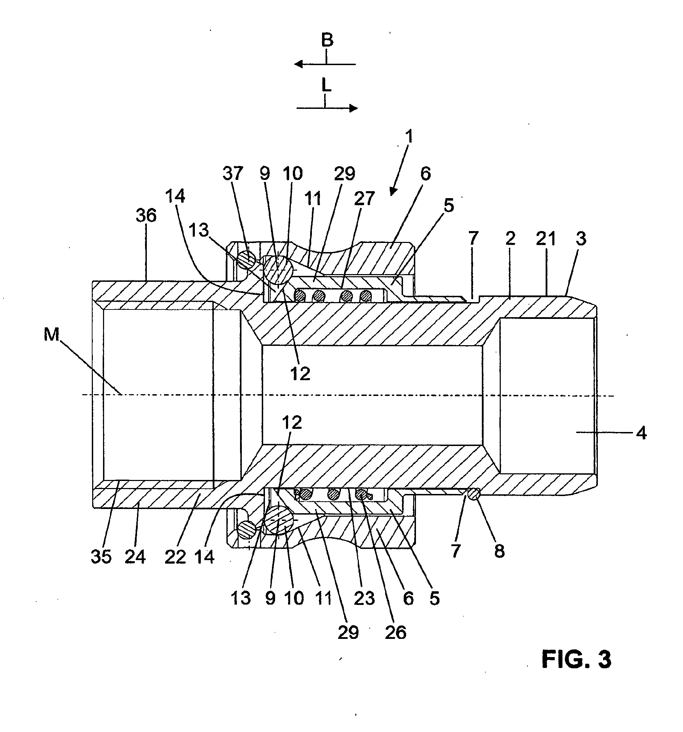

Die Kupplungshülse 2, welche anhand der Figuren 1 und 3 erläutert wird, ist hier rotationssymmetrisch ausgebildet und umfasst eine Seitenwand 22, welche einen Kanal 4 umgibt. Auf der Aussenseite gegenüber dem Kanal 4 ist die Seitenwand 22 mit einer Mantelfläche 3 begrenzt. In der vorliegenden Ausführungsform umfasst die Kupplungshülse 2 weiter den Dichtungsabschnitt 21, einen sich dem Dichtungsabschnitt 21 anschliessenden Lagerungsabschnitt 23 und einen sich dem Lagerungsabschnitt 23 anschliessenden Verbindungsabschnitt 24. Der Dichtungsabschnitt 21 dient der Verbindung und auch der Abdichtung zwischen dem Sanitärsystem und dem Steckverbinder 1. Im vorderen Bereich ist der Dichtungsabschnitt leicht konisch ausgebildet, um das Einschieben der Kupplungshülse 2 in das Sanitärsystem zu erleichtern. Zwischen dem vorderen Bereich und dem Lagerungsabschnitt 23 verläuft der Dichtungsabschnitt 21 dann im Wesentlichen zylindrisch. Der Lagerungsabschnitt 23 dient der Lagerung der Lösehülse 5 und der Betätigungshülse 6, so wie dies weiter unten erläutert wird. Der Verbindungsabschnitt 24, hier als Innengewinde 35 und Aussensechskant 36 ausgebildet, dient im Wesentlichen als Kupplung zu einem weiteren Element, wie einem Schlauch, Rohr oder einem Werkzeug.

Das Löseelement 5 bzw. die Lösehülse 5 ist hier ebenfalls im Wesentlichen rotationssymmetrisch ausgebildet. Vorzugsweise besteht die Lösehülse 5 aus zwei getrennt voneinander ausgebildeten Halbschalen 29. Die beiden Halbschalen 29 bilden dann die Lösehülse 5 bzw. das Löseelement 5. Die Lösehülse 5 umgibt die Kupplungshülse 2 im Bereich des Lagerungsabschnittes 23 und ist bewegbar zur Kupplungshülse 2 bzw. deren Mantelfläche 3 gelagert. Dabei ist die Lösehülse 5 entlang einer Lösebewegung L von einer Ausgangslage in eine Endlage bewegbar. Die beiden Halbschalen 29 werden durch die Betätigungshülse 6 umschlossen und somit an der Kupplungshülse 2 gelagert bzw. gesichert. In den Figuren wird die Lösehülse in der Ausgangslage gezeigt.

Die Betätigungshülse 6 umgibt hier Lösehülse 5 und ist entlang einer Betätigungsbewegung B von einer Ausgangslage in eine Endlage bewegbar. Folglich ist Betätigungshülse 6 zur Kupplungshülse 2 und zur Lösehülse 5 bewegbar angeordnet. Alle Bewegungen verlaufen vorzugsweise entlang der gleichen Achse, nämlich entlang der bzw. parallel zur Mittelachse M. Die Richtung der entsprechenden Bewegung kann aber auch umgekehrt sein.

Die Lösehülse 5 steht über ein Übertragungselement 9 mit der Betätigungshülse 6 in Verbindung, wobei durch das Übertragungselement 9 die Betätigungsbewegung der Betätigungshülse 6 auf die Lösehülse 5 übertragbar ist und somit die Lösebewegung bereitstellbar ist. Folglich kann der Benutzer die Betätigungshülse 6 betätigen und die Bewegung wird auf die Lösehülse 5 übertragen.

Die Kupplungshülse 2 und die sich in der Ausgangslage befindliche Lösehülse 5 stellen einen Aufnahmeraum 7 für einen Sicherungsring 8 eines Versorgungssystems bereit. Die Lösehülse 5 ist während der Lösebewegung L in diesen Aufnahmeraum 7 hinein in ihre Endlage bewegbar ist, wobei der sich im Aufnahmeraum 7 befindliche Sicherungsring 8 durch die Bewegung der Lösehülse 5 radial zur Mittelachse M nach aussen bewegbar ist. Die Lösehülse 7 wird also durch Betätigung der Betätigungshülse 6 in den Aufnahmeraum 7 hineingeschoben und trifft dort auf den Sicherungsring 8, welcher vorzugsweise die Gestalt eines Sprengrings aufweist, wobei der Sicherungsring 8 entsprechend von der Mantelfläche nach aussen bewegt wird, womit dieser ausserhalb des Aufnahmeraums 7 zu liegen kommt und die Verbindung zwischen dem Rohr 30 und der Kupplungshülse 5 somit aufgehoben wird.

Vorzugsweise wird die Betätigungsbewegung B durch das Übertragungselement 9 derart umgelenkt, dass die Lösebewegung L der Lösehülse 5 gegen die Richtung der Betätigungsbewegung B der Betätigungshülse 6 verläuft. Somit kann der Benutzer die Betätigungshülse 6 ergreifen und in Richtung der Betätigungsbewegung B aus dem Sanitärsystem entfernen. Das hat für den Benutzer den Vorteil, dass die Verbindung einhändig und ohne Zuhilfenahme von Werkzeug getrennt werden kann.

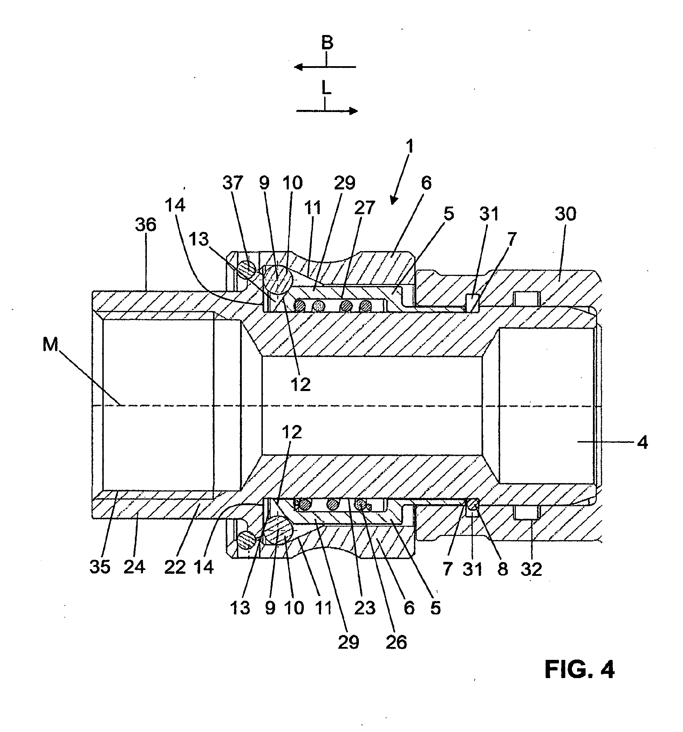

In den Schnittdarstellungen der Figuren 3 und 4 kann eine vorteilhafte Ausbildung des Übertragungselementes 9 besonders gut erkannt werden. Das Übertragungselement 9 hat bevorzugt die Gestalt einer Kugel 10, welche in einem Aufnahmeraum 13 zwischen Betätigungshülse 6 und Lösehülse 5 angeordnet ist. Die Betätigungshülse 6 weist dabei eine Fläche 11 auf, an welcher die Kugel 10 anliegt. Die Lösehülse 5 weist ebenfalls eine Fläche 12 auf, an welcher die Kugel 10 anliegt. Im Querschnitt senkrecht zur Mittelachse M gesehen sind die Flächen 11, 12 geneigt bzw. winklig angeordnet. Die Neigung der beiden Fläche 11, 12 ist dabei bezüglich der Mittelachse M unterschiedlich. Folglich stehen die beiden Flächen 11, 12 in unterschiedlichen Winkeln zur Mittelachse M, insbesondere verlaufen die Winkel gegeneinander. Weiter steht die Kugel hier noch an einer an der Kupplungshülse angeordneten Flanschfläche 14 an.

Beim Verschieben der Betätigungshülse 6 von der Ausgangslage wie in der Figur 3 und 4 gezeigt entlang der Betätigungsbewegung B in die Endlage, wird aufgrund der geneigt angeordneten Fläche 11 die Kugel 9 in Richtung der Mittelachse M verschoben. Dadurch wirkt eine Kraft auf die Fläche 12 der Lösehülse 5, welche diese wiederum in Löserichtung L von der Ausgangslage in die Endlage schiebt, wodurch der Aufnahmeraum 7, in welchem der Sicherungsring 10 liegt, verkleinert wird und der Sicherungsring 10 nach radial nach aussen in die Nut 31 geschoben wird. Wenn der Sicherungsring 10 dann vollständig aus dem Aufnahmeraum 7 des Steckverbinders 1 bewegt wurde bzw. wenn der Innendurchmesser des Sicherungsring 10 in etwa dem Aussendurchmesser des Dichtungsabschnittes 21 entspricht, so kann die Verbindung zwischen Sanitärsystem, hier anhand des Rohres 30 gezeigt, getrennt werden.

Bevorzugterweise sind mindestens zwei Kugeln 10 diametral gegenüber angeordnet, so dass eine gleichmässige Kraftverteilung erzielt werden kann. Die Anordnung von drei, vier, fünf oder gar noch mehr Kugeln 10 ist ebenfalls denkbar.

Wie oben erläutert sind die Kugeln 10 vorzugsweise in einem Aufnahmeraum 13 angeordnet, welcher durch die beiden Flächen 10 und 11, sowie durch die Flanschfläche 14 begrenzt ist. In der Figur 1 kann bezüglich der Flanschfläche 14 erkannt werden, dass es diesbezüglich vorteilhaft ist, wenn diese pro Kugel 9 eine senkrecht zur Mittelachse M verlaufende Rille 25 aufweist. Diese Rille 25 verhindert, dass sich die Kugeln im Aufnahmeraum 13 um die Lösehülse 5 herum bewegen.

Weiter wird die Betätigungshülse 6 über einen Sicherungsring 37 zur Kupplungshülse 2 gesichert. Der Sicherungsring 37 stellt dabei einen Anschlag bereit, welcher die relative Bewegung zwischen Kupplungshülse 2 und Betätigungshülse 6 limitiert. In der Ausgangsstellung liegt der Sicherungsring 37 am Flansch an, welcher die Flanschfläche 14 bereitstellt. In der Kupplungshülse 2 ist der Sicherungsring 37 in einem Einstich 38 gelagert.

Wie in den Figuren 1 bis 5 erkannt werden kann, umfasst der Steckverbinder 1 bevorzugt weiter ein Federelement 26, welches die Betätigungshülse 6 und die Lösehülse 5 in der entsprechenden Ausgangslage hält bzw. welches auf die Betätigungshülse 6 und die Lösehülse 5 eine Rückstellkraft bereitstellt, so dass die Betätigungshülse 6 und die Lösehülse 5 nach erfolgter Betätigung selbsttätig in die Ausgangslage bewegbar sind, wobei die Bewegung von der Lösehülse 5 über das Übertragungselement 9. Das Federelement 26, welches auch als Rückstellelement bezeichnet werden kann, hat hier die Gestalt einer Spiralfeder, welche sich um den Lagerungsabschnitt 23 herum erstreckt. Das Federelement 26 wird hier durch die Lösehülse 5 umschlossen, wobei die Lösehülse 5 eine entsprechende Vertiefung 27 aufweist, in welcher das Federelement 26 liegt.

In den Figuren 1, 2 und 5 kann die Lagerung des Federelementes 26 in axialer Richtung gut erkannt werden. Das Federelement 26 steht an einem Ende 15 mit einem Anschlagselement 16, welches mit der Kupplungshülse in Verbindung steht, in Kontakt. Das Anschlagselement 16 hat hier die Gestalt eines Stiftes 16, welcher mit der Kupplungshülse 2 in Verbindung steht. Bevorzugterweise werden zwei Stifte bezüglich der Mittelachse M gegenüber einander angeordnet. Mit dem anderen Ende 17 steht das Federelement 26 an einer an der Lösehülse 5 angeformten Schulter 18 an. Die Schulter 18 ist dabei Teil der oben genannten Vertiefung 27. Folglich stellt das Federelement eine Axialkraft in Richtung der Mittelachse M von der Kupplungshülse 2 bzw. vom Anschlagselement 16 auf die Lösehülse 5 bereit. Die Lösehülse 5 wird dabei immer in ihre Ausgangslage gedrückt, so dass der Aufnahmeraum 7 für die Aufnahme des Sicherungsrings des Sanitärsystems 30 entsprechend offen bleibt.

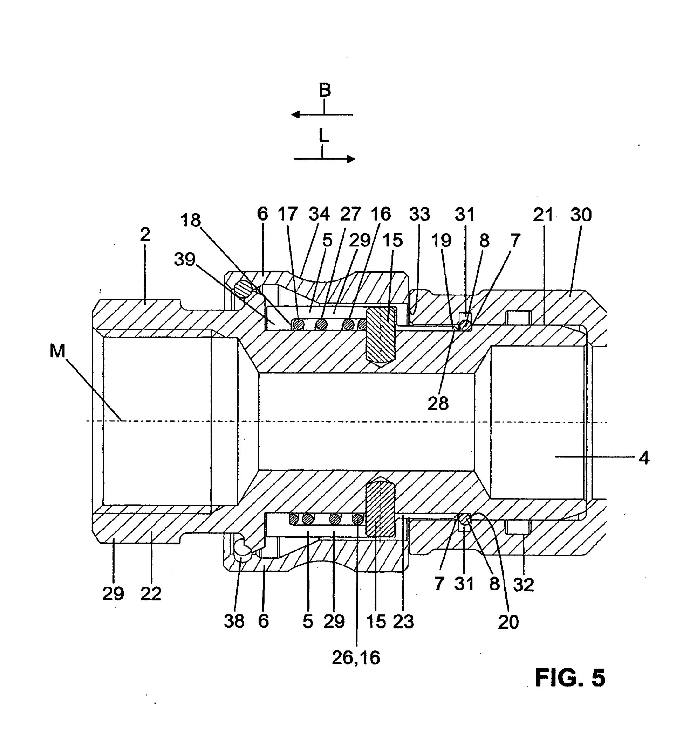

In der Schnittdarstellung der Figur 5 kann dann weiter gut erkannt werden, dass die Lösehülse 5 im Bereich des Aufnahmeraumes 7 mit einer Stirnfläche 19 versehen ist. Mit der Stirnfläche 19 trifft die Lösehülse 5 auf den Sicherungsring 8 im Aufnahmeraum 7 und drückt diesen dann in radialer Richtung in der Nut 31 am Sanitärartikel 30. Die Stirnfläche kommt also bei der Lösebewegung in Kontakt mit dem Sicherungsring 8. Die Stirnfläche 19 ist vorzugweise mit einer Anschrägung 28 als angeschrägte Stirnfläche 19 ausgebildet. Die Anschrägung 28 hat den Vorteil, dass der Sicherungsring einfach und sicher gelöst werden kann.

Der Aufnahmeraum 7 für den Sicherungsring 8 wird in der vorliegenden Ausführungsform durch die Mantelfläche 3 der Kupplungshülse 2, durch eine Stirnfläche 19 der Lösehülse 5 und durch eine sich im Wesentlichen senkrecht zur Mantelfläche 3 erstreckenden Flanschfläche 20 begrenzt.

Der Aussendurchmesser der Lösehülse 5, welcher in den Aufnahmeraum 7 des Sicherungsringes 8 geschoben wird, weist vorzugsweise den gleichen oder einen grösseren Aussendurchmesser auf, wie der Dichtungsabschnitt 21, wobei der Sicherungsring 8 bei der Lösebewegung L auf diesen Aussendurchmesser bringbar ist. Somit wird der Sicherungsring 8 derart aufgeweitet, dass der Dichtungsabschnitt 21 durch den Sicherungsring 8 hindurch bewegt werden kann.

Im Zusammenhang mit der Lösehülse 5 wurde oben bereits erläutert, dass diese aus zwei Halbschalen bereitgestellt werden kann. Diese beiden Halbschalen stellen in der Lösehülse 5 einen Schlitz 39 bereit, durch welchen sich das Anschlagselement 16 hindurch erstreckt, womit das Anschlagselement 16 mit dem Schlitz 39 eine Verdrehsicherung zwischen Kupplungshülse 2 und Lösehülse 5 bereitstellt.

Auf der Aussenseite umfasst die Betätigungshülse 6 eine umlaufende Rille 34, welche durch den Installateur gut ergriffen werden kann.

### BEZUGSZEICHENLISTE

- 1: Steckverbinder
- 2: Kupplungshülse
- 3: Mantelfläche
- 4: Kanal
- 5: Lösehülse
- 6: Betätigungshülse
- 7: Aufnahmeraum
- 8: Sicherungsring
- 9: Übertragungselement
- 10: Kugel
- 11: Fläche
- 12: Fläche
- 13: Aufnahmeraum
- 14: Flanschfläche
- 15: Ende
- 16: Anschlagselement
- 17: Ende
- 18: Schulter
- 19: Stirnfläche
- 20: Flanschfläche
- 21: Dichtungsabschnitt
- 22: Seitenwand
- 23: Lagerungsabschnitt
- 24: Verbindungsabschnitt
- 25: Rille
- 26: Federelement
- 27: Vertiefung
- 28: Anschrägung
- 29: Halbschalen
- 30: Rohr
- 31: Nut
- 32: Dichtungsnut
- 33: Rohrende
- 34: Rille
- 35: Innengewinde
- 36: Aussensechskant
- 37: Sicherungsring
- 38: Einstich
- 39: Schlitz
- L: Lösebewegung
- B: Betätigungsbewegung
- M: Mittelachse

## Patentansprüche

1. Lösbarer Steckverbinder (1) für Sanitärsysteme umfassend
eine Kupplungshülse (2) mit einer um eine Mittelachse (M) umlaufende Seitenwand (22), welche einen Kanal (4) zur Durchführung eines Mediums durch die Kupplungshülse (2) umgibt und aussenseitig durch eine Mantelfläche (3) begrenzt ist,
ein Löseelement (5), welches auf der Mantelfläche (3) bewegbar gelagert ist und entlang einer Lösebewegung (L) von einer Ausgangslage in eine Endlage bewegbar ist,
eine Betätigungshülse (6), welche entlang einer Betätigungsbewegung (B) von einer Ausgangslage in eine Endlage bewegbar zur Kupplungshülse (2) und zum Löseelement (5) angeordnet ist, und
ein Übertragungselement (9), wobei
das Löseelement (5) über das Übertragungselement (9) mit der Betätigungshülse (6) in Verbindung steht, wobei durch das Übertragungselement (9) die Betätigungsbewegung (B) der Betätigungshülse (6) auf das Löseelement (5) übertragbar und somit die Lösebewegung (L) bereitstellbar ist, und wobei
die Kupplungshülse (2) und das sich in der Ausgangslage befindliche Löseelement (5) einen Aufnahmeraum (7) für einen Sicherungsring (8) eines Versorgungssystems bereitstellen, wobei das Löseelement (5) während der Lösebewegung (L) in diesen Aufnahmeraum hinein in seine Endlage bewegbar ist, wobei der sich im Aufnahmeraum (7) befindliche Sicherungsring (8) durch die Bewegung des Löseelementes (5) radial zur Mittelachse (M) nach aussen bewegbar ist, **dadurch gekennzeichnet,**
**dass** die Betätigungsbewegung (B) durch das Übertragungselement (9) umgelenkt wird, wobei die Lösebewegung (L) des Löseelements (5) gegen die Richtung der Betätigungsbewegung (B) der Betätigungshülse (6) verläuft und
**dass** das Übertragungselement (9) die Gestalt mindestens einer Kugel (10) hat, welche zwischen Betätigungshülse (6) und Löseelement (5) angeordnet ist und mit einer Fläche (11) der Betätigungshülse (6) und mit einer Fläche (12) des Löseelementes (5) in Kontakt steht, wobei die Flächen (11, 12) im Querschnitt senkrecht zur Mittelachse (M) gesehen geneigt zur Bewegungsrichtung des Löseelementes (5) bzw. der Betätigungshülse (6) verlaufen.

2. Lösbarer Steckverbinder nach Anspruch 1, **dadurch gekennzeichnet, dass** für jede der Kugeln (10) ein Aufnahmeraum (13) vorgesehen ist, welcher durch die besagten Flächen (11, 12) und eine an der Kupplungshülse (2) angeformte Flanschfläche (14) begrenzt ist.

3. Lösbarer Steckverbinder nach einem der vorhergehenden Ansprüche, **dadurch gekennzeichnet, dass** das Löseelement (5) als Lösehülse (5) bereitgestellt ist, wobei die Lösehülse (5) vorzugsweise aus zwei Halbschalen besteht, welche die Kupplungshülse (2) umgeben.

4. Lösbarer Steckverbinder nach einem der vorhergehenden Ansprüche, **dadurch gekennzeichnet, dass** der Steckverbinder (1) weiter ein Federelement (14) umfasst, welches die Betätigungshülse (6) und das Löseelement (5) in der entsprechenden Ausgangslage hält bzw. welches auf die Betätigungshülse (6) und das Löseelement (5) eine Rückstellkraft bereitstellt, so dass die Betätigungshülse (6) und das Löseelement (5) nach erfolgter Betätigung selbsttätig in die Ausgangslage bewegbar sind, wobei diese Bewegung vom Löseelement (5) über das Übertragungselement (9) übertragbar ist.

5. Lösbarer Steckverbinder nach Anspruch 4, **dadurch gekennzeichnet, dass** das Federelement (14) mit einem Ende (15) an einem Anschlagselement (16), das mit der Kupplungshülse (2) in Verbindung steht, ansteht, und in einem anderen Ende (17) an einer am Löseelement (5) angeformten Schulter (18) ansteht.

6. Lösbarer Steckverbinder nach einem der vorhergehenden Ansprüche, **dadurch gekennzeichnet, dass** das Löseelement (5) eine Stirnfläche (19) umfasst, welche vorzugsweise angeschrägt ausgebildet ist, wobei die Stirnfläche (19) bei der Lösebewegung in Kontakt mit dem Sicherungsring kommt und diesen radial nach aussen drückt.

7. Lösbarer Steckverbinder nach einem der vorhergehenden Ansprüche, **dadurch gekennzeichnet, dass** der Aufnahmeraum (7) für den Sicherungsring (8) durch die Mantelfläche (3) der Kupplungshülse (2), durch eine Stirnfläche (19) des Löseelementes (5) und durch eine sich im Wesentlichen senkrecht zur Mantelfläche (3) erstreckenden Flanschfläche (20) begrenzt ist.

8. Lösbarer Steckverbinder nach Anspruch 7, **dadurch gekennzeichnet, dass** sich an die Flanschfläche (20) ein zylindrisch ausgebildeter Dichtungsabschnitt (21) anschliesst, welcher mit im Sanitärsystem angeordneten Dichtungen kontaktierbar ist, so dass zwischen Kupplungshülse (2) und Sanitärsystem eine bezüglich Fluiden dichte Verbindung bereitstellbar ist.

9. Lösbarer Steckverbinder nach Anspruch 8, **dadurch gekennzeichnet, dass** der Aussendurchmesser des Löseelementes (5), welcher in den Aufnahmeraum (7) des Sicherungsringes (8) geschoben wird, den gleichen oder einen grösseren Aussendurchmesser aufweist, wie der Dichtungsabschnitt (21), wobei der Sicherungsring (8) bei der Lösebewegung auf diesen Aussendurchmesser bringbar ist.

10. Lösbarer Steckverbinder nach einem der vorhergehenden Ansprüche, **dadurch gekennzeichnet, dass** das Löseelement (5) einen sich entlang der Mittelachse (M) erstreckenden Schlitz (39) aufweist, durch welchen sich das Anschlagselement (16) hindurch erstreckt, womit das Anschlagselement (16) mit dem Schlitz (39) eine Verdrehsicherung zwischen Kupplungshülse (2) und Lösehülse (5) bereitstellt.

11. Sanitäres Versorgungssystem umfassend einen lösbaren Steckverbinder (1) nach einem der vorhergehenden Ansprüche und ein Rohr (30) mit einem Rohrende (33), wobei im Bereich des Rohrendes eine Aufnahmenut (31) vorhanden ist, in welcher Aufnahmenut (31) der Sicherungsring (8) gelagert ist.

12. Sanitäres Versorgungssystem nach Anspruch 11, **dadurch gekennzeichnet, dass** die Aufnahmenut (31) eine Tiefe aufweist, welche mindestens der Dicke des Sicherungsrings (8) entspricht.

## Claims

1. Releasable plug-in connector (1) for sanitary systems, comprising
a coupling sleeve (2) with a side wall (22) which runs around a centre axis (M), encloses a channel (4) for guiding a medium through the coupling sleeve (2) and is bounded on the outside by a lateral surface (3),
a release element (5), which is mounted in a movable manner on the lateral surface (3) and can be moved from a starting position into an end position over the course of a release movement (L),
an actuating sleeve (6), which is arranged in relation to the coupling sleeve (2) and the release element (5) such that it can be moved from a starting position into an end position over the course of an actuating movement (B), and
a transfer element (9), wherein
the release element (5) is connected to the actuating sleeve (6) via the transfer element (9), wherein the actuating movement (B) of the actuating sleeve (6) can be transferred to the release element (5) by the transfer element (9), and it is thus possible to provide the release movement (L), and wherein
the coupling sleeve (2) and the release element (5) located in the starting position provide an accommodating space (7) for a securing ring (8) of a supply system, wherein the release element (5), during the release movement (L), can be moved into said accommodating space, and into its end position, wherein the securing ring (8), which is located in the accommodating space (7), can be moved radially outwards in relation to the centre axis (M) by the movement of the release element (5), **characterized**
**in that** the actuating movement (B) is deflected by the transfer element (9), wherein the release movement (L) of the release element (5) runs counter to the direction of the actuating movement (B) of the actuating sleeve (6), and
**in that** the transfer element (9) is in the form of at least one ball (10), which is arranged between the actuating sleeve (6) and release element (5) and is in contact with a surface (11) of the actuating sleeve (6) and with a surface (12) of the release element (5), wherein the surfaces (11, 12), as seen in cross section in a direction perpendicular to the centre axis (M),
are inclined in relation to the movement direction of the release element (5) and/or of the actuating sleeve (6).

2. Releasable plug-in connector according to Claim 1, **characterized by** the provision, for each of the balls (10), of an accommodating space (13) bounded by said surfaces (11, 12) and a flange surface (14), which is formed on the coupling sleeve (2).

3. Releasable plug-in connector according to one of the preceding claims, **characterized in that** the release element (5) is provided as a release sleeve (5), wherein the release sleeve (5) comprises preferably two half-shells which enclose the coupling sleeve (2).

4. Releasable plug-in connector according to one of the preceding claims, **characterized in that** the plug-in connector (1) further comprises a spring element (14), which retains the actuating sleeve (6) and the release element (5) in the appropriate starting position and which provides the actuating sleeve (6) and the release element (5) with a restoring force, in which case the actuating sleeve (6) and the release element (5), once actuation has taken place, can be moved automatically into the starting position, wherein said movement can be transferred from the release element (5) via the transfer element (9).

5. Releasable plug-in connector according to Claim 4, **characterized in that** the spring element (14) has one end (15) positioned against a stop element (16), which is connected to the coupling sleeve (2), and another end (17) positioned against a shoulder (18), which is formed on the release element (5).

6. Releasable plug-in connector according to one of the preceding claims, **characterized in that** the release element (5) comprises an end surface (19), which is of preferably bevelled design, wherein the end surface (19), during the release movement, comes into contact with the securing ring and pushes the latter radially outwards.

7. Releasable plug-in connector according to one of the preceding claims, **characterized in that** the accommodating space (7) for the securing ring (8) is bounded by the lateral surface (3) of the coupling sleeve (2), by an end surface (19) of the release element (5) and by a flange surface (20) extending essentially perpendicularly to the lateral surface (3).

8. Releasable plug-in connector according to Claim 7, **characterized in that** the flange surface (20) is followed by a cylindrical sealing portion (21), which can be brought into contact with seals arranged in the sanitary system, this making it possible to establish a fluid-tight connection between the coupling sleeve (2) and sanitary system.

9. Releasable plug-in connector according to Claim 8, **characterized in that** the external diameter of the release element (5) pushed into the accommodating space (7) of the securing ring (8) is equal to, or greater than, that of the sealing portion (21), wherein the securing ring (8) can be brought to this external diameter during the release movement.

10. Releasable plug-in connector according to one of the preceding claims, **characterized in that** the release element (5) has a slot (39) which extends along the centre axis (M) and through which the stop element (16) extends, as a result of which the stop element (16), with the slot (39), provides a rotation-prevention means between coupling sleeve (2) and release sleeve (5).

11. Sanitary supply system comprising a releasable plug-in connector (1) according to one of the preceding claims and a pipe (30) with a pipe end (33), wherein an accommodating groove (31) is present in the region of the pipe end, the securing ring (8) being mounted in said accommodating groove (31).

12. Sanitary supply system according to Claim 11, **characterized in that** the accommodating groove (31) has a depth which corresponds at least to the thickness of the securing ring (8).

## Revendications

1. Connecteur à emboîtement (1) amovible pour systèmes sanitaires, comportant
un manchon d'accouplement (2) pourvu d'une paroi latérale (22) s'étendant autour d'un axe médian (M), laquelle paroi latérale entoure un conduit (4) pour le passage d'un milieu à travers le manchon d'accouplement (2) et est limitée du côté extérieur par une surface d'enveloppe (3),
un élément de libération (5), lequel est monté de manière mobile sur la surface d'enveloppe (3) et peut être déplacé au cours d'un déplacement de libération (L) à partir d'une position de départ jusqu'à une position finale,
un manchon d'actionnement (6), lequel est disposé de manière à pouvoir être déplacé par rapport au manchon d'accouplement (2) et par rapport à l'élément de libération (5) à partir d'une position de départ jusqu'à une position finale au cours d'un déplacement d'actionnement (B) et
un élément de transmission (9),
l'élément de libération (5) étant en liaison avec le manchon d'actionnement (6) par le biais de l'élément de transmission (9), le déplacement d'actionnement (B) du manchon d'actionnement (6) pouvant être transmis à l'élément de libération (5) au moyen de l'élément de transmission (9) et le déplacement de libération (L) pouvant par conséquent être produit et
le manchon d'accouplement (2) et l'élément de libération (5) se trouvant dans la position de départ produisant un espace de réception (7) pour une bague de fixation (8) d'un système d'alimentation, l'élément de libération (5) pouvant, pendant le déplacement de libération (L), être déplacé à l'intérieur de cet espace de réception jusqu'à sa position finale, la bague de fixation (8) se trouvant dans l'espace de réception (7) pouvant être déplacée vers l'extérieur radialement par rapport à l'axe médian (M) par le déplacement de l'élément de libération (5), **caractérisé**
**en ce que** le déplacement d'actionnement (B) est dévié par l'élément de transmission (9), le déplacement de libération (L) de l'élément de libération (5) s'étendant en sens inverse au déplacement d'actionnement (B) du manchon d'actionnement (6) et
**en ce que** l'élément de transmission (9) présente la forme d'au moins une bille (10), laquelle est disposée entre le manchon d'actionnement (6) et l'élément de libération (5) et est en contact avec une surface (11) du manchon d'actionnement (6) et avec une surface (12) de l'élément de libération (5), les surfaces (11, 12) s'étendant, vu en section transversale perpendiculairement à l'axe médian (M), de manière inclinée par rapport à la direction de déplacement de l'élément de libération (5) ou du manchon d'actionnement (6).

2. Connecteur à emboîtement amovible selon la revendication 1, **caractérisé en ce qu'**il est prévu un espace de réception (13) pour chacune des billes (10), lequel espace de réception est délimité par lesdites surfaces (11, 12) et par une surface de rebord (14) formée sur le manchon d'accouplement (2).

3. Connecteur à emboîtement amovible selon l'une quelconque des revendications précédentes, **caractérisé en ce que** l'élément de libération (5) est prévu en tant que manchon de libération (5), le manchon de libération (5) étant de préférence constitué de deux demi-coques, lesquelles entourent le manchon d'accouplement (2).

4. Connecteur à emboîtement amovible selon l'une quelconque des revendications précédentes, **caractérisé en ce que** le connecteur à emboîtement (1) comporte en outre un élément ressort (14), lequel maintient le manchon d'actionnement (6) et l'élément de libération (5) dans la position de départ correspondante ou lequel produit sur le manchon d'actionnement (6) et l'élément de libération (5) une force de rappel, de telle sorte que le manchon d'actionnement (6) et l'élément de libération (5) puissent être déplacés automatiquement jusqu'à la position de départ une fois que l'actionnement a eu lieu, ce déplacement pouvant être transmis à partir de l'élément de libération (5) par le biais de l'élément de transmission (9).

5. Connecteur à emboîtement amovible selon la revendication 4, **caractérisé en ce que** l'élément ressort (14) s'appuie par une extrémité (15) contre un élément de butée (16) qui est en liaison avec le manchon d'accouplement (2) et, à une autre extrémité (17), s'applique contre un épaulement (18) formé sur l'élément de libération (5).

6. Connecteur à emboîtement amovible selon l'une quelconque des revendications précédentes, **caractérisé en ce que** l'élément de libération (5) comporte une surface frontale (19), laquelle est réalisée de préférence de manière biseautée, la surface frontale (19) venant en contact avec la bague de fixation lors du déplacement de libération et poussant celle-ci radialement vers l'extérieur.

7. Connecteur à emboîtement amovible selon l'une quelconque des revendications précédentes, **caractérisé en ce que** l'espace de réception (7) pour la bague de fixation (8) est délimité par la surface d'enveloppe (3) du manchon d'accouplement (2), par une surface frontale (19) de l'élément de libération (5) et par une surface de rebord (20) s'étendant essentiellement perpendiculairement à la surface d'enveloppe (3).

8. Connecteur à emboîtement amovible selon la revendication 7, **caractérisé en ce qu'**une portion d'étanchéité (21) cylindrique suit la surface de rebord (20), laquelle portion d'étanchéité peut être mise en contact avec des joints d'étanchéité disposés dans le système sanitaire, de telle sorte qu'une liaison étanche par rapport aux fluides puisse être produite entre le manchon d'accouplement (2) et le système sanitaire.

9. Connecteur à emboîtement amovible selon la revendication 8, **caractérisé en ce que** le diamètre extérieur de l'élément de libération (5) qui est poussé dans l'espace de réception (7) de la bague de fixation (8) est supérieur ou égal au diamètre extérieur de la portion d'étanchéité (21), la bague de fixation (8) pouvant être amenée sur ce diamètre extérieur lors du déplacement de libération.

10. Connecteur à emboîtement amovible selon l'une quelconque des revendications précédentes, **caractérisé en ce que** l'élément de libération (5) comprend une fente (39) s'étendant le long de l'axe médian (M), à travers laquelle s'étend l'élément de butée (16), moyennant quoi l'élément de butée (16) produit, conjointement avec la fente (39), une fixation anti-rotation entre le manchon d'accouplement (2) et la douille de libération (5).

11. Système d'alimentation sanitaire comportant un connecteur à emboîtement (1) amovible selon l'une quelconque des revendications précédentes et un tuyau (30) pourvu d'une extrémité de tuyau (33), une rainure de réception (31) étant prévue dans la région de l'extrémité de tuyau, dans laquelle rainure de réception (31) est montée la bague de fixation (8).

12. Système d'alimentation sanitaire selon la revendication 11, **caractérisé en ce que** la rainure de réception (31) présente une profondeur qui correspond au moins à l'épaisseur de la bague de fixation (8).
